# EUROPÄISCHE PATENTSCHRIFT

(11) **EP 0 882 145 B1**
(45) Veröffentlichungstag und Bekanntmachung des Hinweises auf die Patenterteilung: **13.06.2001**
(21) Anmeldenummer: 97917244.2
(22) Anmeldetag: 22.02.1997
(51) Int. Cl.: C25D 7/10, F16C 33/12, C25D 3/56, C25D 5/34

(54) **VERFAHREN ZUR HERSTELLUNG VON SCHICHTWERKSTOFF FÜR GLEITLAGER SOWIE EIN GALVANISIERBAD ZUR DURCHFÜHRUNG DIESES VERFAHRENS**
METHOD OF PRODUCING LAYERED MATERIAL FOR SLIDING BEARINGS AND AN ELECTROPLATING BATH FOR CARRYING OUT THIS METHOD
PROCEDE DE PRODUCTION D'UN MATERIAU STRATIFIE POUR PALIERS LISSES ET BAIN ELECTROLYTIQUE APPROPRIE POUR METTRE LEDIT PROCEDE EN OEUVRE

(30) Priorität: 24.02.1996 DE 19606993
(43) Veröffentlichungstag der Anmeldung: 09.12.1998
(73) Patentinhaber: Federal-Mogul Wiesbaden GmbH & Co.KG, 65201 Wiesbaden (DE)
(72) Erfinder: HUHN, Hans-Ulrich, D-65388 Schlangenbad (DE); WIEBACH, Dietmar, D-65195 Wiesbaden (DE); MÜLLER, Klaus, D-65207 Wiesbaden (DE)
(86) Internationale Anmeldenummer: DE9700354
(87) Internationale Veröffentlichungsnummer: WO9731138

(56) Entgegenhaltungen:
- EP-A- 0 048 579
- GB-A- 577 335
- GB-A- 679 947
- US-A- 3 226 308
- US-A- 4 363 854
- DATABASE WPI Section Ch, Week 7712 Derwent Publications Ltd., London, GB; Class M11, AN 77-21526Y XP002035460 & SU 528 358 A (CAR IND SPEC DES) , 2.September 1976

## Beschreibung

Die Erfindung betrifft ein Verfahren zur Herstellung von Schichtwerkstoff für Gleitlager mit einem Stahlrücken und einer Bronzeschicht, auf der galvanisch nacheinander eine binäre Schicht auf Blei- oder Zinnbasis und eine Einlaufschicht auf Molybdänbasis abgeschieden wird. Die Erfindung bezieht sich auch auf ein Galvanisierbad zur Durchführung dieses Verfahrens.

Die Entwicklung immer leistungsstärkerer Motoren erhöht auch die Anforderungen an die in diesen Motoren eingebauten Lager bezüglich Dauerbelastbarkeit, Verschleißfestigkeit und Korrosionsschutz.

Da es bei diesen Lagern insbesondere auf verbesserte Anpassungsschichten ankommt, die einem extrem hohen Flächendruck standhalten müssen, wurden Gleitlager mit einer Einlaufschicht auf Molybdänbasis entwickelt.

Aus der DE 29 26 708 A1 ist ein Gleitelement bekannt, das auf der Gleitschicht eine Molybdänoxidschicht aufweist, die mit gleichmäßiger, mikrorissiger Struktur ausgebildet ist und eine Dicke von 0,0005 bis 0,003 mm besitzt. Diese Molybdänoxidschicht ist auf einer ternären Gleitschicht aus beispielsweise PbSn10Cu2 aufgebracht. Diese bekannten Gleitlager zeichnen sich durch geringen Verschleiß und erhöhte Korrosionsbeständigkeit aus. Nicht zufriedenstellend sind diese Materialien, wenn eine höhere Drehzahlfestigkeit und ein besseres Einlaufverhalten gefordert werden.

Versuche mit binären Gleitschichten, wie z.B. PbCu3, die bezüglich dieser Anforderungen besser sind, haben jedoch gezeigt, daß die Haftung der Molybdänoxidschicht nicht zufriedenstellend ist. Mit den herkömmlichen Elektrolyten zeigten sich bereits nach wenigen Produktionschargen bzw. kurzen Standzeiten, daß es zu einer streifigen Abscheidung der PbCu-Schicht kommt. Es wurden helle und dunkle Bereiche festgestellt, wobei die Haftung der Molybdänoxidschicht auf den hellen Bereichen äußerst schlecht war. Die Haftung auf den dunklen Bereichen der Binärschicht war dagegen hervorragend. Ferner zeigten sich Schichtdickenschwankungen von 12 µm und mehr, was für hochbelastbare Lager nicht akzeptabel ist.

Es ist daher Aufgabe der Erfindung, ein Verfahren und cin Galvanisierbad bereitzustellen, mit dem die Haftung von Molybdänoxidschichten auf binären Gleitschichten verbessert wird.

Diese Aufgabe wird mit einem Verfahren gelöst, bei dem zur Abscheidung der binären Schicht ein Galvanisierbad mit mindestens 15 mg/l eines nicht ionischen Netzmittels und mit mindestens 10 g/l eines Benzolderivates verwendet wird und bei dem nach der Abschcidung der binären Schicht und vor der Abscheidung der Einlaufschicht eine anodische Aktivierung mindestens einer Oberflächenschicht der binären Schicht durchgeführt wird.

Als binäre Schichten eignen sich insbesondere PbCu-Schichten mit Kupferanteilen von 1 bis 10%, PbSn-Schichten mit Zinnanteilen von 10 bis 30% sowie Zinn-Antimon-Schichten mit Antimon-Anteilen von 1 bis 10%.

Zunächst hatte man anhand eines PbCu-Elektrolyten versucht, die Stabilität des Galvanisierbades durch die Zugabe von organischen Komponenten zu verbessern. Wird der PbCu-Elektrolyt ohne organische Komponenten betrieben, kommt es zu völlig ungleichmäßigen, unkontrollierten Abscheidungen. Im niedrigen Stromdichtebereich scheidet sich vorzugsweise Kupfer ab. Bei höheren Stromdichten scheiden sich PbCu und Pb-Phasen getrennt ab. Durch die Zugabe von Benzolderivaten, insbesondere von Resorcin bis 10 g/l konnte dieses Abscheidungsverhalten nur unwesentlich verändert werden. Man ist dann zu nicht ionischen Netzmitteln übergegangen und hat diese Netzmittel bis zu 10 mg/l zugegeben. Es wurde festgestellt, daß diese nicht ionischen Netzmittel zwar zunehmend die Kupferabscheidung inhibieren, das Abscheidungsverhalten hinsichtlich Streuung und Schichtdickenverlauf blieb jedoch unbefriedigend. So wurde zum Beispiel ein starker Schichtabfall an Öllöchern beobachtet.

Es hat sich überraschend gezeigt, daß erst die Kombination von nicht ionischem Netzmittel und Benzolderivaten eine deutliche Verbesserung bewirkt. Die synergistische Wirkung beider organischer Komponenten stellte sich aber erst mit höheren Konzentrationen ein. Vorzugsweise sollte der Anteil des nicht ionischen Netzmittels bei 15 bis 30 mg/l und der des Benzolderivates bei 10 bis 20 g/l liegen. Es konnten sowohl die Streuung als auch die Abscheidung bis in einen Stromdichtebereich von 2 A/dm² hinein deutlich verbessert werden.

Mit dieser Verbesserung des Abscheideverhaltens ging allerdings eine Verschlechterung der Haftung der Molybdänoxidschicht einher. Auch die dunklen PbCu-Phasen gingen zunehmend in die helle PbCu-Phase über, die bis zu einer feinkristallinen Abscheidung im niedrigen Stromdichtebereich führte. Die aufgebrachte Molybdänoxidschicht zeigte überhaupt keine Haftung mehr.

Dieser Nachteil konnte erst dann behoben werden, als die Binärschicht anodisch aktiviert wurde. Hierzu wurde die Stromrichtung umgekehrt, so daß das Gleitlager nicht als Kathode sondern als Anode geschaltet war. Diese Umschaltung hatte einen Angriff auf die zuvor abgeschiedene PbCu-Schicht zur Folge.

Versuche mit einem Testblech zeigten, daß die so behandelte PbCu-Schicht sich je nach Stromdichte beim Galvanisiervorgang von Tiefschwarz (hohe Stromdichte) über Braun nach Grau-Braun (niedrige Stromdichte) verfärbte. Im Fall hoher Stromdichten, in dem sich die dunkle PbCu-Phase abschied, nahm die Oberfläche ein samtartiges Aussehen an. Die Schicht ließ sich teilweise abwischen, wobei die Färbung erhalten blieb. Die aufgebrachte Molybdänoxidschicht zeigte überhaupt keine Haftung mehr. Im Fall mittlerer und niedriger Stromdichten hingegen war eine ausgezeichnet haftende Molybdänoxidschicht zu beobachten.

Offensichtlich gelingt durch das kurzzeitige Anodisieren eine ausreichende Aktivierung der hellen PbCu-Phase, um die anschließende Molybdänoxidschicht haftfest aufzubringen. Durch das Anodisieren wird vermutlich auf der Blei-Kupfer-Gleitschicht eine Schicht oxidischen Charakters gebildet, auf der dann die Molybdänoxidschicht gut haftet.

Vorzugsweise wird als nicht ionisches Netzmittel ein Fettsäureglykolester und als Benzolderivat Resorcin verwendet. Es hat sich gezeigt, daß zusätzlich auch Borsäure eine stabilisierende Wirkung auf das Galvanisierbad ausübt. Die Zugabe der Borsäure muß so erfolgen, daß das Galvanisierbad abgesättigt wird.

Ein bevorzugtes Galvanisierbad zur Abscheidung einer PbCu-Schicht weist folgende Zusammensetzung auf:

| | |
|---|---|
| Fettsäureglykolester | 15 - 30 mg/l |
| Resorcin | 10 - 20 g/l |
| Kupfer | 1 - 10 g/l |
| Blei | 90 - 110 g/l |
| HBF₄ | 30 - 45 g/l |

und Borsäure zur Absättigung des Bades.

Die Temperatur des Galvanisierbades sollte auf 20 - 30° eingestellt werden.

Es hat sich gezeigt, daß zur anodischen Aktivierung der binären Schicht der Strom im Galvanisierbad lediglich für 10 - 60 sec umgepolt werden muß. Die Stromdichte wird vorzugsweise auf 1 bis 4 A/dm², vorteilhafterweise auf 2,5A/dm², eingestellt. Die galvanische Abscheidung der binären Schicht wird am besten mit Stromdichten im Bereich von 1 bis 3 A/dm² durchgeführt.

Das erfindungsgemäße Galvanisierbad für die Abscheidung von binären Schichten weist ein nicht ionisches Netzmittel und ein Benzolderivat auf.

Beispielhafte Ausführungsformen werden nachfolgend anhand der Zeichnungen näher erläutert.

Es zeigen:
- Figur 1: einen Schnitt durch den erfindungsgemäßen Werkstoff,
- Figur 2: einen Schnitt durch einen Werkstoff gemäß dem Stand der Technik,
- Figur 3: eine Draufsicht auf eine Lagerschale mit einer Beschichtung nach dem Stand der Technik,
- Figur 4: den Wanddickenverlauf der in Figur 3 gezeigten Lagerschale und
- Figur 5: den Wanddickenverlauf für eine nach dem erfindungsgemäßen Verfahren hergestellte Lagerschale.

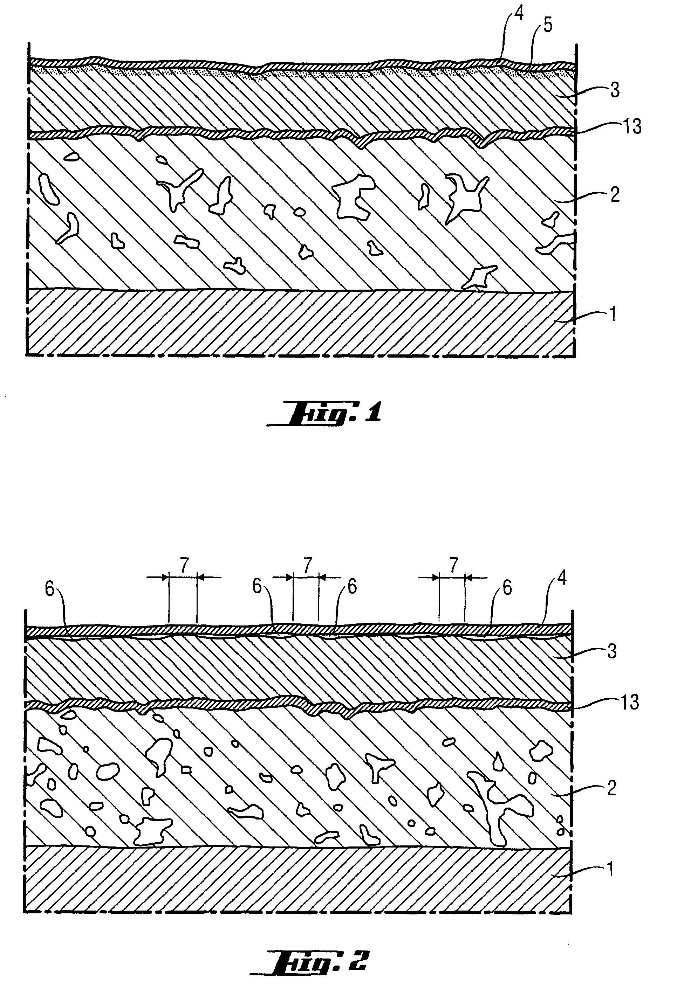

In der Figur 1 ist der erfindungsgemäße Schichtwerkstoff dargestellt. Auf einer Stahlstützschale 1 befindet sich eine gegossene Bleibronze 2, auf der galvanisch eine Zwischenschicht 13 aus Ni bzw. Ni/NiSn und eine PbCu3-Schicht 3 aufgebracht worden sind. Die Badzusammensetzung und die verwendeten Stromdichten waren wie folgt:
Kupfer 2,8 g/l
Blei 100 g/l
HBF₄ 40 g/l
Fettsäureglykolester 20 ml/l
Resorcin 13 g/l
abgesättigt mit Borsäure
Badtemperatur: Raumtemperatur
Stromdichte 2 A/dm².

Nach der galvanischen Abscheidung der Schicht 3 wurde die anodische Aktivierung durchgeführt. Hierzu wurde im Galvanisierbad für 20 sec die Stromrichtung umgekehrt, wobei eine Stromdichte von 2,5 A/dm² eingesetzt wurde. Die Veränderung des Oberflächenbereichs, in dem die Blei-Oxid-Schicht durch die anodische Aktivierung entsteht, ist durch die Schicht 5 angedeutet.

Nach der anodischen Aktivierung wurde ebenfalls galvanisch die Molybdänoxidschicht 4 galvanisch aufgebracht, die vollständig auf der Blei-Kupfer-Schicht 3 haftet.

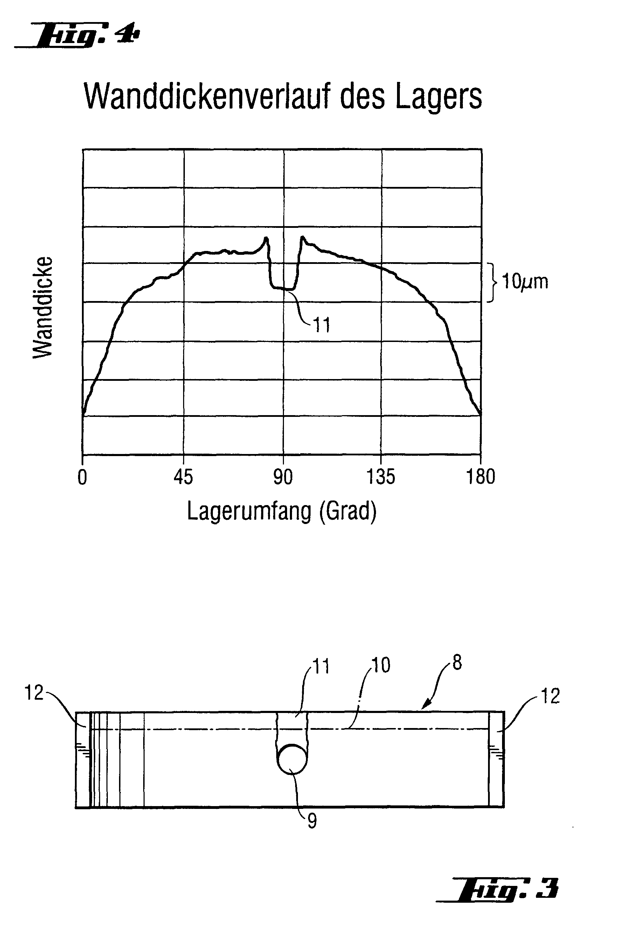

Zum Vergleich ist in der Figur 2 ein Schichtwerkstoff nach dem Stand der Technik dargestellt. Der Schichtaufbau bezüglich der Schichten 1, 2 und 3 entspricht dem in Figur 1, wobei die PbCu3-Schicht mit einem herkömmlichen Galvanisierbad ohne organische Zusätze hergestellt wurde. Die aufgebrachte Molybdänoxidschicht haftet nur in den Bereichen, die mit dem Bezugszeichen 7 versehen sind. In den dazwischenliegenden Bereichen sind Hohlräume 6 festzustellen, wo die Schicht 4 überhaupt keine Haftung aufweist. Die streifenförmigen Bereiche 7 der Blei-Kupfer-Schicht zeigen eine dunkle Färbung, während die dazwischen befindlichen Bereiche, wo die Molybdänoxidschicht keine Bindung mit der Kupfer-Blei-Schicht aufweist, hell gefärbt ist.

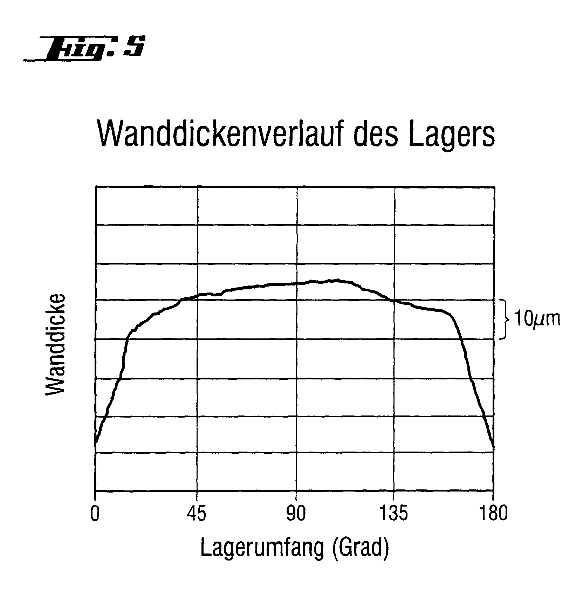

In der Figur 3 ist die Draufsicht auf eine Lagerschale 8 dargestellt. Es sind die beiden Teilflächen 12 und in der Gleitfläche ein Ölloch 9 zu sehen, das seitlich einen Bereich 11 aufweist, in dem die Schichtdicke abgefallen ist. Die Bahn, längs derer der Schichtdickenverlauf gemessen wurde, ist mit dem Bezugszeichen 10 belegt.

Diese Lagerschale 8 besitzt eine PbCu3-Gleitschicht, die in folgendem Galvanisierbad abgeschieden wurde:
Kupfer 3,4 g/l
Blei 90 g/l
HBF₄ 40 g/l
Fettsäureglykolester 3,5 mg/l
Resorcin 4,5 g/l
keine Borsäure
Temperatur des Galvanisierbades: Raumtemperatur.

Das Ergebnis der Messung des Wandickenverlaufs ist in der Figur 4 dargestellt. Die Stelle, an der der Wanddickenverlauf eine Delle aufweist, ist ebenfalls mit dem Bezugszeichen 11 gekennzeichnet, um den Bezug zu dem entsprechenden Bereich in der Figur 3 herzustellen.

In der Figur 5 ist der Wanddickenverlauf einer Lagerschale dargestellt, die nach dem erfindungsgemäßen Verfahren hergestellt worden ist. Es handelte sich ebenfalls um eine PbCu3-Schicht, die mit einem Galvanisierbad hergestellt wurde, wie es für den Schichtwerkstoff gemäß der Figur 1 verwendet wurde. Es ist deutlich zu sehen, daß der Wanddickenverlauf keine Unregelmäßigkeiten aufweist.

### Bezugszeichen:

- 1: Stahlstützschale
- 2: Bronzeschicht
- 3: Blei-Kupfer-Schicht
- 4: Molybdänoxidschicht
- 5: Bleioxidschicht
- 6: Hohlräume
- 7: dunkle Bereiche der Blei-Kupfer-Schicht
- 8: Lagerschale
- 9: Ölloch
- 10: Meßbahn
- 11: Bereich des Schichtdickenabfalls
- 12: Teilflächen
- 13: Zwischenschicht

## Patentansprüche

1. Verfahren zur Herstellung von Schichtwerkstoff für Gleitlager mit einem Stahlrücken und einer Bronzeschicht, auf der galvanisch nacheinander eine binäre Schicht auf Blei- oder Zinn-Basis und eine Einlaufschicht auf Molybdänbasis abgeschieden wird, dadurch gekennzeichnet,
daß zur Abscheidung der binären Schicht ein Galvanisierbad mit mindestens 15 mg/l eines nicht ionischen Netzmittels und mit mindestens 10 g/l eines Benzolderivats verwendet wird, und
daß nach der Abscheidung der binären Schicht und vor der Abscheidung der Einlaufschicht eine anodische Aktivierung mindestens einer Oberflächenschicht der binären Schicht durchgeführt wird.

2. Verfahren nach Anspruch 1, dadurch gekennzeichnet, daß 15 - 30 mg/l nicht ionisches Netzmittel und 10 - 20 g/l Benzolderivat eingesetzt wird.

3. Verfahren nach Anspruch 2, dadurch gekennzeichnet, daß als nicht ionisches Netzmittel ein Fettsäureglykolester und als Benzolderivat Resorcin verwendet wird.

4. Verfahren nach einem der Ansprüche 1 bis 3, dadurch gekennzeichnet, daß im Galvanisierbad zusätzlich Borsäure verwendet wird, mit der das Galvanisierbad abgesättigt wird.

5. Verfahren nach einem der Ansprüche 1 bis 4, dadurch gekennzeichnet, daß ein Galvanisierbad für die Abscheidung einer PbCu-Schicht mit folgender Zusammensctzung verwendet wird:
| | |
|---|---|
| Fettsäureglykolester | 15 - 30 mg/l |
| Resorcin | 10 - 20 g/l |
| Kupfer | 1 - 10 g/l |
| Blei | 90 -110 g/l |
| HBF₄ | 30 - 45 g/l |
Borsäure zur Absättigung des Bades.

6. Verfahren nach einem der Ansprüche 1 bis 5, dadurch gekennzeichnet, daß die Temperatur des Galvanisierbades auf 20 - 30°C eingestellt wird.

7. Verfahren nach einem der Ansprüche 1 bis 6, dadurch gekennzeichnet, daß zur anodischen Aktivierung der binären Schicht der Strom im Galvanisierbad für 10 - 60 sec, vorzugsweise 20 sec, umgepolt wird.

8. Verfahren nach einem der Ansprüche 1 bis 7, dadurch gekennzeichnet, daß die Stromdichre während der Umpolung auf 1 bis 4 A/dm², vorzugsweise auf 2.5 A/dm², eingestellt wird.

9. Verfahren nach einem der Ansprüche 1 bis 8, dadurch gekennzeichnet, daß die Abscheidung der binären Schicht mit Stromdichten von 1 bis 3 A/dm² durchgefübrt wird.

10. Galvanisierbad für die Abscheidung von binären Schichten, dadurch gekennzeichnet, daß es mindestens 15 mg/l eines nicht ionischen Netzmittels und mindestens 10 g/l eines Benzolderivates enthält.

## Claims

1. A process for producing laminate material for plain bearings having a steel back and a bronze layer on which a lead-based or tin-based binary layer and a molybdenum-based running-in layer are successively deposited in an electroplating procedure, characterised in that
an electroplating bath with at least 15 mg/l of a non-ionic wetting agent and at least 10 g/I of a benzene derivative is used for depositing the binary layer, and
after the deposit of the binary layer and before the deposit of the running-in layer anodic activation of at least one surface layer of the binary layer is effected.

2. A process according to claim 1 characterised in that 15 - 30 mg/l of non-ionic wetting agent and 10 - 20 g/l benzene derivative are used.

3. A process according to claim 2 characterised in that a fatty acid glycol ester is used as the non-ionic wetting agent and resorcinol is used as the benzene derivative.

4. A process according to one of claims 1 to 3 characterised in that boric acid is additionally used in the electroplating bath, with which the electroplating bath is saturated.

5. A process according to one of claims 1 to 4 characterised in that an electroplating bath is used for the deposit of a PbCu-layer of the following composition:
| | |
|---|---|
| fatty acid glycol ester | 15 - 30 mg/l |
| resorcinol | 10 - 20 g/l |
| copper | 1 - 10 g/l |
| lead | 90 - 110 g/l |
| HBF₄ | 30 - 45 g/l |
boric acid for saturation of the bath

6. A process according to one of claims 1 to 5 characterised in that the temperature of the electroplating bath is set to 20 - 30°C.

7. A process according to one of claims 1 to 6 characterised in that for anodic activation of the binary layer the current in the electroplating bath is reversed in polarity for 10 - 60 seconds, preferably 20 seconds.

8. A process according to one of claims 1 to 7 characterised in that the current density during the polarity reversal is set to from 1 to 4 A/dm², preferably to 2.5 A/dm².

9. A process according to one of claims 1 to 8 characterised in that deposit of the binary layer is effected with current densities of from 1 to 3 A/dm².

10. A galvanising bath for the deposit of binary layers characterised in that it contains at least 15 mg/l of a non-ionic wetting agent and at least 10 g/l of a benzene derivative.

## Revendications

1. , Procédé de production d'un matériau stratifié pour paliers lisses possédant une partie arrière en acier et une couche de bronze sur laquelle sont appliquées l'une après l'autre par dépôt électrolytique une couche binaire à base de plomb ou d'étain et une couche de rodage à base de molybdène, caractérisé en ce que,
pour déposer la couche binaire, on utilise un bain électrolytique comportant au moins 15 mg/l d'un agent mouillant non ionique et au moins 10 g/l d'un dérivé du benzène, et en ce que,
après le dépôt électrolytique de la couche binaire et avant le dépôt de la couche de rodage, on procède à une activation anodique d'au moins une couche de surface de la couche binaire.

2. Procédé selon la revendication 1, caractérisé en ce que l'on utilise 15 à 30 mg/l d'un agent mouillant non ionique et 10 à 20 g/l d'un dérivé du benzène.

3. Procédé selon la revendication 2, caractérisé en ce que l'on utilise en tant qu'agent mouillant non ionique un glycolester d'acide gras et en tant que dérivé du benzène le résorcinol.

4. Procédé selon l'une des revendications 1 à 3, caractérisé en ce que l'on utilise en outre dans le bain électrolytique de l'acide borique avec lequel on sature le bain électrolytique.

5. Procédé selon l'une des revendications 1 à 4, caractérisé en ce que l'on utilise un bain électrolytique pour le dépôt d'une couche PbCu présentant la composition suivante :
| | |
|---|---|
| Glycolester d'acide gras | 15 à 30 mg/l |
| Résorcinol | 10 à 20 g/l |
| Cuivre | 1 à 10 g/l |
| Plomb | 90 à 110 g/l |
| HBF₄ | 30 à 45 g/l |
et de l'acide borique à saturation du bain.

6. Procédé selon l'une des revendications 1 à 5, caractérisé en ce que la température du bain électrolytique est réglée entre 20 et 30 °C.

7. Procédé selon l'une des revendications 1 à 6, caractérisé en ce que, pour procéder à l'activation anodique de la couche binaire, on inverse le courant dans le bain électrolytique pendant 10 à 60 secondes, de préférence pendant 20 secondes.

8. Procédé selon l'une des revendications 1 à 7, caractérisé en ce que la densité du courant pendant l'inversion est réglée entre 1 et 4 A/dm², et est de préférence égale à 2,5 A/dm²,

9. Procédé selon l'une des revendications 1 à 8, caractérisé en ce que le dépôt de la couche binaire est réalisé avec des densités de courant comprises entre 1 et 3 A/dm².

10. Bain électrolytique pour le dépôt de couches binaires, caractérisé en ce qu'il contient au moins 15 mg/l d'un agent mouillant non ionique et au moins 10 g/l d'un dérivé du benzène.
